# EUROPEAN PATENT APPLICATION

(11) **EP 4 596 644 A1**
(43) Date of publication of application: **06.08.2025**
(21) Application number: 24155832.9
(22) Date of filing: 05.02.2024
(51) Int. Cl.: C09D 13/00, B43K 19/02, B43K 19/18

(54) **ERASABLE, UNBURNT COLORED LEAD FOR WRITING, DRAWING AND PAINTING DEVICES OR ERASABLE, UNBURNT COLORED CHALK AS WELL AS WRITING, PAINTING OR DRAWING DEVICE COMPRISING AN ERASABLE, UNBURNT COLORED LEAD AND METHOD FOR MANUFACTURING AN ERASABLE, COLORED LEAD OR CHALK**

(71) Applicant: Faber- Castell AG, 90546 Stein (DE)
(72) Inventor: Costa, Nelson, 13565-251 São Carlos/SP (BR); Grizzo, Amanda, 13560-647 Sao Carlos/SP (BR); Costa, Célia D., 13560-161 Sao Carlos/SP (BR); de Mattos Amadio, Tatiane, 13560-450 São Carlos SP (BR)
(74) Representative: Meissner Bolte Nürnberg

(57) **Abstract**

The invention relates to an erasable, unburnt colored lead for writing, drawing and painting devices or erasable, unburnt colored chalk containing at least one filler material, graphite, at least one colorant, at least one binding agent and at least one wax, wherein boron nitride is present as a filler material and at least on pigment is present as colorant.

The invention further relates to a writing, painting or drawing device comprising an erasable, unburnt colored lead and a method for manufacturing such a colored lead or colored chalk.

## Description

The present invention relates to an erasable, unburnt colored lead for writing, drawing and painting devices or an erasable, unburnt colored chalk and a writing, drawing and painting device comprising an erasable, unburnt colored lead. The invention further relates to a method for manufacturing an erasable, colored lead or chalk.

Colored pencils are known to provide numerous benefits for children, such as helping with motor coordination, improving concentration, promoting relaxation, helping to develop socialization and interaction, and play a very important role in learning.

Although color pencils can provide many benefits, children normally use graphite pencils to write notes in their notebooks, with only one color, the color of graphite, while educators use different colors to write on blackboards. The student, however, in most cases, is unable to use an erasable, colored writing device to take notes and facilitate learning. Therefore, erasable colored writing devices are of great interest to facilitate learning, as well as making it more attractive and fun. In addition to writing, there is use for painting and drawing, where there is the possibility of correction if there is an error.

In the field of erasable colored pencils, we can find different approaches to reach a similar goal, for example, extruded polymeric leads with pigments are known. Although they have good breaking strength, good erasability and good color intensity, they are not very soft in their application, making application for writing difficult and not having homogeneity in painting like a common non-erasable painting pencil. Normally, for this type of polymeric leads, waxes with a high melting point are used, since it is believed that using low melting wax may negatively affect the application. This effect may be due to shear forces generated during the application on the paper, which could be able to warm the wax and therefore allow significant penetration into the paper fibers, becoming unable to remove it. Besides, the act of eraser provides even more friction, facilitating the penetration into the paper. In these cases, there is a limitation in the composition, making it difficult to obtain very soft leads due to the combination of polymers and low melting point waxes.

Another approach being used in the literature in the attempt to make a very soft colored erasable pencil is to use materials formed by a lamellar crystalline structure, such as graphite. The application of these materials to the paper reduces the penetration of substances such as pigments or dyes that are present in the formulation. It is known that hexagonal boron nitride, also known as "white graphite", has a crystalline structure similar to graphite, therefore, the line written on the paper is applied in a layered manner, not penetrating the innermost layers of the paper, making it easier to be removed from the paper with an eraser.

The key difference between boron nitride and graphite is that boron nitride is composed of boron and nitrogen atoms, whereas graphite contains carbon atoms.

There are different strategies for producing leads with hexagonal boron nitride in their composition, such as sintered (burnt) or non-sintered (unburnt) leads. For example, a sintered (burnt) lead is described in EP 3 461 869 A1. Sintered leads have a first stage of lead production with the majority of the composition having only boron nitride. This stage is followed by impregnation with waxes and dyes to provide softness and color to the lead, respectively. In the sintering process it is necessary to use dyes because during the impregnation process pigments are not recommended as they have larger particle size than dyes and cannot penetrate the structure of the previously sintered lead. Furthermore, neither dyes nor pigments are added to the mass that will be subjected to the sintering process as the ovens reach very high temperatures, in the order of 800°C, which would cause degradation of the pigment/dye. In this case, it is also possible to make them permanent with the application of a solution. However, one disadvantage of these leads is their lightfastness, which is lower compared to common leads produced with pigments. It is also difficult to produce a wide range of colors due to toxicological restrictions on some classes of dyes. Furthermore, the production process involves many steps, making it very long.

Another case would be non-sintered leads with boron nitride and binders based on cellulose derivatives, starches and/or polyvinyl alcohol in their composition. In this case, the lightfastness is better in relation to leads produced with dyes, however, these types of leads are generally characterized only by their application as erasable, and it is not possible to make them permanent with the application of a solution.

It is therefore an object of the invention to provide an erasable, colored lead or chalk for writing, drawing and painting devices having improved properties, in particular an erasable, colored lead or chalk for writing, drawing and painting devices showing good lightfastness, and which can create both erasable and permanent application. Further, it is an object of the invention to provide a writing, painting or drawing device comprising an erasable, colored lead and a method for manufacturing a colored lead or chalk.

The first object is solved by an erasable, unburnt, i.e. non-sintered colored lead for writing, drawing and painting devices or an erasable, unburnt colored chalk according to claim 1. According to the invention, the erasable, unburnt (non-sintered) colored lead for writing, drawing and painting devices or erasable, unburnt colored chalk contains at least one filler material, graphite, at least one colorant, at least one binding agent and at least one wax, in particular at least two types of waxes, wherein boron nitride is present (or: included or contained) as a filler material and at least one pigment is present as colorant.

In other words: The colored lead or chalk is produced by a non-sintering process, thus by mixing process of raw materials and subsequent forming step, e.g. extrusion, from a lead or chalk bass mass containing at least boron nitride as a filler material, graphite, at least one pigment as colorant, at least one binding agent and at least one wax as raw materials.

The following mainly refers to a lead, but the explanations also apply to a chalk.

It has become apparent that the application of such colored lead or chalk is soft, has good color intensity, good resistance to breakage, good lightfastness and also excellent coverage on paper whilst being still easily removable therefrom.

Due to the lamellar structure of boron nitride and graphite, the application is erasable. Boron nitride and graphite also influence lead slippage, i.e. the consumer's perception of softness.

Most waxes used have a low melting point so that erasability is not affected when used in combination with raw materials in a lamellar structure.

The combination of different pigments offers the possibility to provide a wide range of colors. For example, inorganic pigments such as iron oxides, titanium dioxide, lithopones (mixture of barium sulphate and zinc sulphide) or carbon black, and/or organic pigments such as pigments from the group of azo pigments, phthalocyanine pigments, perylene pigments, DPP pigments can be present.

Known leads and previous manufacturing processes include dyes responsible for the color of the lead, however, dyes that have toxicological approval and good lightfastness for application in school articles are difficult to find. By the use of pigments, a better resistance to light can be obtained in comparison to lead compositions using solely dyes. Lightfastness tests on equipment SunTest (CPS Heraeus Industrietechnik, Germany, intensity 700W/m², wavelength 290nm) were carried out and a significant improvement was observed in relation to leads with dye impregnation.

In a preferred embodiment, the at least one colorant is present in an amount between 0.5 and 25 % by weight. More preferably, the at least one colorant is present in an amount between 0.5 and 20 % by weight, i.e. the maximum proportion of the colorants included is 20 % by weight.

More preferably, at least one pigment and at least one dye are present in combination. The dye(s) present can be water-soluble, alcohol-soluble and/or oil-soluble, in particular anionic or cationic dyes may be used.

In particular, the pigments are present in an amount between 0.5 and 15 % by weight and/or the dyes are present in an amount between 0.5 to 10 wt.-% in the lead or chalk.

The writing of the colored lead or chalk is erasable due to the use of boron nitride and graphite, preventing the colorant, i.e. the pigments and/or dyes from penetrating deep into the paper. However, the writing of the erasable colored lead or chalk can become permanent with the application of a solution that solubilizes parts of the raw materials in the lead composition, causing this part to penetrate the paper fibers. In this case, the application is no longer removable.

In this case, the dyes are secondary in obtaining the color and their main function is to penetrate the paper after using a solution, making the writing non-erasable. The solution used depends on the nature of the dye, so that the dyes soluble in the applied solution penetrate the pater, making the application permanent. Although dyes may therefore be used in this composition, less quantity is used compared to leads that require impregnation.

An interesting fact is that the permanent color of the lead can be different from the erasable color, for example when using red pigments and blue dyes, the application becomes purple, which can be erasable. If you wish to make the writing, drawing or painting permanent, the solution is applied to the application, which means that only the blue dye penetrates the paper, the pigments continue to be erasable on the surface of the paper, therefore, the application, which was previously purple and erasable, becomes blue and non-erasable.

It is also possible to use the solution to generate a highlighter effect, by using a solution in which the dye is soluble and a device such as a brush. The dye can be spread over the application. As a solution, a composition of a solvent, i.e. water or alcohol, depending on the chemical nature of the dye used, water and film-forming resins can be used.

In a preferred embodiment, at least one pH stabilizing agent is present to maintain the functioning of the colorant, in particular when dyes are present as colorant. The pH stabilizing agent also functions as a wetting and sliding agent.

In a preferred embodiment, the at least one pH stabilizing agent is present in an amount between 0.1 and 4.0 % by weight. For example lactic acid may be used as pH stabilizing agent.

Solely boron nitride can be included as a filler material or further filler materials, such as stearate and/or a mineral filler, such as kaolin and/or talc and/or calcium carbonate and/or pumice powder, clay may be present in addition.

In a preferred embodiment, the at least one filler material, i.e. the boron nitride and any further filler material where appropriate, is present in an amount between 40 and 80 % by weight in the lead or chalk bass mass to achieve good lightfastness and erasability. The mineral filler can also influence the mechanical strength. Further, costs can also be reduced by using these fillers.

The graphite content in the lead or chalk influences both the hardness of the lead or chalk and the color of the application. In a preferred embodiment, the graphite is present in an amount between 1.0 and 3.0 % by weight.

In a preferred embodiment, the at least one wax is present in an amount between 10.0 and 50.0 % by weight.

Preferably, the at least one wax has a melting point below 70 °C, when used in combination with raw materials in a lamellar structure.

In a preferred embodiment, at least two types of waxes are present. Different combinations of waxes can be used to achieve softer and stiffer leads and a desirable laydown appearance.

Preferably at least two types of waxes with different length of carbon chains, in particular waxes comprising a C16 chain and waxes comprising a C18 chain are used in combination. C18 compositions are more related to lead resistance and C16 compositions are more related to deposition and softness. In a preferred embodiment, waxes comprising a C16 chain are present in an amount between 20.0 and 35.0 % by weight and waxes comprising a C18 chain are present in an amount between 60.0 and 80.0 % by weight, within the total percentage of weight of the amount of waxes in the lead or chalk.

For example, fatty acid waxes, in particular stearic acid, hydrogenated soybean oil, hydrogenated canola oil, hydrogenated palm oil, bees wax and/or hydrogenated castor oil are present as waxes. The waxes function as a lubricant, their combination generates the desired softness and sliding properties.

Ideally, it is desired that at least one of the waxes used be hydrogenated or have a saturated carbon chain, this way, the hydrogens present in the chains interact with water, making it necessary to add a smaller amount in the process and, thus, reducing drying time. In addition, better compatibility with water helps in better interaction between the waxes and the polymeric network, thus improving the resistance of the leads. Although these waxes generally have a low melting point, when used in combination with raw materials in a lamellar structure, they do not affect erasability.

In a preferred embodiment, the at least one binding agent is present in an amount between 5.0 and 20.0 % by weight and/or cellulose derivatives or other derivatives of natural polymers are present as binding agent.

The mechanical strength and softness of the colored lead can be adjusted via wax content and mainly binders. The higher the binder concentration, the harder the lead. In addition to being mainly responsible for the mechanical strength of the leads, the binding agent improves the processability of the lead or chalk base mass and the shaping of the lead or chalk strands.

Further common additives such as surfactants or emulsifiers may additionally be present in the unburnt colored lead for writing, drawing and painting devices or unburnt colored chalk. These additives can be added to the lead or chalk base mass during the production of the colored lead or chalk in order to facilitate the processability of the raw materials.

In summary, the following formulation can be given for the unburnt lead or chalk lead itself and the raw materials for the production of the unburnt lead or chalk lead, respectively.

| **Raw Material** | **Percentage (%)** |
|---|---|
| Fillers | 40.0 - 80.0% |
| Colorant (Pigment and/or Dyes) | 0.5 - 20.00% |
| Graphite | 1.0 - 3.0% |
| Binder | 5.0 - 20.0% |
| Wax(es) | 10.0 - 50.0% |
| pH stabilizing | 0.1 - 4.0% |

| **Lead/Chalk** | **Percentage (%)** |
|---|---|
| Fillers | 40.0 - 80.0% |
| Colorant (Pigment and/or Dyes) | 0.5 - 20.00% |
| Graphite | 1.0 - 3.0% |
| Binder | 5.0 - 20.0% |
| Wax(es) | 10.0 - 50.0% |
| pH stabilizing | 0.1 - 4.0% |

The second object is solved by a writing, painting or drawing device according to claim 12. The device comprises an unburnt colored lead according to any of the embodiments described above and may be a pencil comprising a sheath made of wood or made of a wood substitute material ("wood plastic compound") surrounding the unburnt colored lead. Alternatively, the device is a mechanical pencil, for example a fine lead pencil equipped with a colored lead.

The third object is solved by a method for manufacturing a colored lead or colored chalk, in particular to any of the embodiments described above, according to claim 13, comprising the following method steps.

A first method step (step a) comprises mixing and homogenizing the at least one filler material, i.e. at least boron nitride, the at least one colorant, i.e. the at least one pigment, the graphite, the at least one binding agent and the at least one wax thereby forming a lead- or chalk base mass, i.e. a granulate or paste-like material.

Further raw materials, such as the at least one pH stabilizing agent and/or dyes as colorant, can be added.

A second method step (step b) comprises extruding the lead- or chalk base mass, in particular by means of hydraulic pressing, thereby forming lead or chalk strands.

An extrusion speed of around 1400 cm³/min can be specified as a basic process parameter for the extrusion process. This depends on the desired diameter of the colored lead or colored chalk, whereby the diameter of a colored lead should typically be between 0.3 and 6.0 mm, the diameter of a colored chalk is usually between 6 and 12 mm. For example, for obtaining 1000 units of a lead having a diameter of 2.4 mm, 1,2 min is needed. Depending on the water content of the lead or chalk base mass, thus the humidity of the base mass, it is also possible to work at different pressures.

A third method step (step c) comprises drying the extruded lead or chalk strands thereby forming the erasable unburnt colored lead or unburnt colored chalk.

The method according to the invention offers the advantage that it requires only three steps for manufacturing the colored lead, i.e. mixing, pressing and drying, so that time to obtain the leads is significantly reduced. In contrast, known processes are characterized by several stages such as mixing, pressing, oven, impregnation with waxes and dyes, what is time-consuming and also requires high-temperatures, such as in the oven stage, in which a temperature of 600°C-1020°C is required. With the method according to the invention, no high temperatures are required and around three times less time are needed.

In a preferred embodiment, method step a) further comprises the following sub-steps:
a1) mixing the at least one filler material, i.e. at least boron nitride, the graphite, the binding agent and the at least one colorant, i.e. the solid state materials, in particular for 25 - 35 min, preferably about 30 min,
a2) adding the at least one wax, in particular in a melted state, the pH stabilizing agent, if present, and water, i.e. the liquid materials;
a3) heating the mixture to a temperature 50 - 60 °C and maintaining the temperature for about 120 min,
a4) cooling the mixture to a temperature of 40 - 46 °C.

The total duration of the mixing process lasts for about 3 to 4 hours.

In a preferred embodiment, drying the extruded lead or chalk strands (step c)) is carried out at a temperature between 40 - 70°C. The total duration of the drying step lasts for about 20 hours, to remove the water added during the manufacturing process until reaching around 1% humidity content or less.

In another preferred embodiment, the at least one colorant is added in an amount between 0.5 and 25% by weight of the lead- or chalk base mass, more preferably in an amount between 0.5 and 20% by weight.

Preferably, at least one pigment and at least one dye are added as colorant.

In a preferred embodiment, the at least one filler material is added in an amount between 40 and 80% by weight of the lead- or chalk base mass.

In a preferred embodiment, graphite is added in an amount between 1.0 and 3.0% by weight of the lead- or chalk base mass.

In a further preferred embodiment, the at least one wax is added in an amount between 10.0 and 50.0% by weight of the lead- or chalk base mass. In particular a wax having a melting point below 70 °C is added.

Preferably, at least two types of waxes are added, in particular at least two types of waxes with different length of carbon chains are added, in particular waxes comprising a C16 chain and waxes comprising a C18 chain.

In a preferred embodiment, waxes comprising a C16 chain are added in an amount between 20.0 and 35.0% by weight and waxes comprising a C18 chain are added in an amount between 60.0 and 80.0% by weight within the total percentage of weight of the amount of waxes in the lead or chalk.

In a preferred embodiment, the at least one binding agent is added in an amount between 5.0 and 20.0% by weight of the lead- or chalk base mass and/or cellulose derivatives or other derivatives of natural polymers are added as binding agent.

The at least one pH stabilizing agent is preferably added in an amount between 0.1 and 4.0% by weight.

Some specific formula examples of the invention are shown in the tables below.

### Example 1: Erasable part: pink / permanent part: pink

| **Raw Material** | **Percentage (%)** |
|---|---|
| Boron Nitride ¹⁾ | 42.30 |
| Pigment Red 122 ⁴⁾ | 2.00 |
| Sanolin Ponceau Dye ⁷⁾ | 1.40 |
| Graphite ³⁾ | 1.40 |
| Hydrogenated Palm Oil ⁹⁾ | 20.40 |
| Stearic Acid ¹¹⁾ | 10.00 |
| Paraffin Wax ⁸⁾ | 17.20 |
| Lactic Acid ¹⁵⁾ | 0.30 |
| Cellulose Derivative ¹⁴⁾ | 5.00 |
| **TOTAL:** | **100.00** |

A colored lead according to example 1 shows great softness, good erasability and good lightfastness.

### Example 2: Erasable part: green/ permanent part: green

| **Raw Material** | **Percentage (%)** |
|---|---|
| Boron Nitride ¹⁾ | 75.9 |
| Pigment Blue 15:3 ⁵⁾ | 0.90 |
| Pigment Yellow 13 ⁶⁾ | 0.60 |
| Tartrazine Dye (Yellow 5)¹⁸⁾ | 1.10 |
| Brilliant Blue Dye ¹⁶⁾ | 1.50 |
| Graphite ³⁾ | 2.00 |
| Stearic Acid ¹¹⁾ | 2.20 |
| Hydrogenated Soybean Oil ¹⁰⁾ | 3.80 |
| Hydrogenated Palm Oil ⁹⁾ | 4.20 |
| Lactic Acid ¹⁵⁾ | 0.50 |
| Cellulose Derivative ¹⁴⁾ | 7.30 |
| **TOTAL:** | **100.00** |

A colored lead according to example 2 comprises boron nitride in an amount of 75.9 wt.-% and therefore shows high erasability.

### Example 3: Erasable part: purple/ permanent part: blue

| **Raw Material** | **Percentage (%)** |
|---|---|
| Boron Nitride ¹⁾ | 43.00 |
| Calcium Stearate ¹⁹⁾ | 3.40 |
| Graphite ³⁾ | 1.00 |
| Pigment Red 122 ⁴⁾ | 9.10 |
| Brilliant Blue Dye ¹⁶⁾ | 5.00 |
| Hydrogenated Castor Oil ¹³⁾ | 10.00 |
| Hydrogenated Soybean Oil ¹⁰⁾ | 10.00 |
| Beeswax ¹²⁾ | 2.30 |
| Lactic Acid ¹⁵⁾ | 1.20 |
| Cellulose Derivative ¹⁴⁾ | 15.00 |
| **TOTAL:** | **100.00** |

A colored lead according to example 3 has great mechanical resistance and great lightfastness.

### Example 4: Erasable part: blue/ permanent part: blue

| **Raw Material** | **Percentage (%)** |
|---|---|
| Boron Nitride ¹⁾ | 56.20 |
| Kaolin ²⁾ | 2.50 |
| Graphite ³⁾ | 2.60 |
| Pigment Violet 23 ¹⁷⁾ | 3.10 |
| Pigment Blue 15:3 ⁵⁾ | 6.60 |
| Brilliant Blue Dye ¹⁶⁾ | 2.00 |
| Hydrogenated Castor Oil ¹³⁾ | 6.00 |
| Hydrogenated Soybean Oil ¹⁰⁾ | 5.00 |
| Hydrogenated Palm Oil ⁹⁾ | 5.40 |
| Lactic Acid ¹⁵⁾ | 0.35 |
| Cellulose Derivative ¹⁴⁾ | 10.25 |
| **TOTAL:** | 100.00 |

A colored lead according to example 4 shows great lightfastness and good erasability.

The amounts are in percent by weight and indicate the proportion of each individual substance in the raw materials as well as in the lead itself.

### Product names/manufacturers:

¹⁾ Boron nitride (CAS No. 10043-11-5; example 1: Très BN PUPH500, Saint Gobain; example 2: Boron Nitride Powder LN05, Zibo Kevins Ceramic Materials Co., Ltd.),
²⁾ Kaolin (CAS No. 1332-58-7; example 1: SAZ003, Imerys; example 2: ASP^{®} 602, Basf),
³⁾ Graphite (CAS No. 7782-42-5; example 1: Natural Flake Graphite, MG94, Unimate; example 2: Micrograf 9425MA, Nacional de Grafite),
⁴⁾ Pigment Red 122 (CAS No. 16043-40-6, CI 73915; example 1: PV Fast^{®} Pink E 01, Heubach; example 2: Alpafast Pink E PL-2745, Meghamani Pigments)
⁵⁾ Pigment Blue 15:3 (CAS No 147-14-8, CI 74160; example 1: Pigment Heliogen Blue D 7079, BASF; example 2: Monolite^{™} Blue 515303, Heubach),
⁶⁾ Pigment Yellow 13 (CAS No. 5102-83-0, CI 21100; example 1: Pigment Sunbrite Yellow 13, SunChemical Corporation; example 2: Pigment Lilyperm Yellow 1148 A, Lilly Group CO, Ltd.)
⁷⁾ Sanolin Ponceau (CI 16255; example: Sanolin Ponceau 4RC 82, Heubach Colorants Brasil Ltda)
⁸⁾ Paraffin Wax (CAS No. 63231-60-7; example 1: Solven Wax 170, Solven; example 2: ISOCER^{®} A07-2, Isogama)
⁹⁾ Hydrogenated palm oil (CAS No. 68514-74-9; example 1: Hydrogenated palm oil, Industrias Xhara Ltda.; example 2: Hydrogenated palm oil, A. Azevedo Ind. E Com. De Óleos Ltda.)
¹⁰⁾ Hydrogenated soybean oil (CAS No. 8016-70-4; Manufacturers examples: Industrias Xhara Ltda.; A. Azevedo Ind. E Com. De Óleos Ltda.) ¹¹⁾ Stearic acid (CAS No. 93028-76-3; example 1: Stearic Acid - TPOS, Vegetallis Indústria E Comércio Ltda.; example 2: Azecid 1885, A. Azevedo Ind. E Com. De Óleos Ltda.)
¹²⁾ Beeswax (CAS No. 8012-89-3), Manufacturers examples: Wenzel
¹³⁾ Castor Oil Hydrogenated (CAS No. 8001-78-3, Manufactures example: A. Azevedo Ind. E Com. De Óleos Ltda.; Campestre
¹⁴⁾ Cellulose derivatives: Example 1: HPMC hydroxypropyl methyl cellulose (CAS No. 9004-65-3), Shandong Head Group Co., Ltd.; example 2: Carboxymethylcellulose (CAS 9004-32-4), Denvercell, Denver Especialidades Químicas)
¹⁵⁾ LACTIC ACID PA (CAS No. 50-21-5), Manufacturers examples: Exodo; MERCK
¹⁶⁾ Brilliant Blue dye (CI 42090), Manufacturers examples: Plury Química Ltds.; Plentychem Indústria e Comercial
¹⁷⁾ Pigment Violet 23 (CAS No. 6358-30-1), Example 1: Pigment Alpafast Violet RL AS 3609, Meghamani Organics Ltd; example 2: Pigment Chromophtal Violet D 5800, BASF
¹⁸⁾ Tartrazine Dye, Yellow 5 (CAS No. 1934-21-0, CI 19140); example 1: PLURY QUÍMICA LTDA, example 2: Heubach Colorants Brasil Ltda.
¹⁹⁾ Calcium Stearate (CAS No. 1592-23-0), Manufacturers example: ADVANT INDÚSTRIA COMÉRCIO IMPORTAÇÃO E EXPORTAÇÃO DE PRODUTOS QUÍMICOS; BAERLOCHER.

## Claims

1. Erasable, unburnt colored lead for writing, drawing and painting devices or erasable, unburnt colored chalk containing at least one filler material, graphite, at least one colorant, at least one binding agent and at least one wax, in particular at least two types of waxes, wherein boron nitride is present as a filler material and at least one pigment is present as colorant.

2. Erasable, unburnt colored lead or erasable, unburnt colored chalk according to claim 1, wherein the at least one colorant is present in an amount between 0.5 and 25% by weight, preferably in an amount between 0.5 and 20% by weight.

3. Erasable, unburnt colored lead or erasable, unburnt colored chalk according to claim 1 or 2, wherein at least one dye and at least one pigment are present as colorant.

4. Erasable, unburnt colored lead or erasable, unburnt colored chalk according to any one of the preceding claims, wherein at least one pH stabilizing agent is present, in particular wherein the at least one pH stabilizing agent is present in an amount between 0.1 and 4.0% by weight.

5. Erasable, unburnt colored lead or erasable, unburnt colored chalk according to any one of the preceding claims, wherein the at least one filler material is present in an amount between 40 and 80% by weight.

6. Erasable, unburnt colored lead or erasable, unburnt colored chalk according to any one of the preceding claims, wherein graphite is present in an amount between 1.0 and 3.0% by weight.

7. Erasable, unburnt colored lead or erasable, unburnt colored chalk according to any one of the preceding claims, wherein the at least one wax is present in an amount between 10.0 and 50.0% by weight.

8. Erasable, unburnt colored lead or erasable, unburnt colored chalk according to any one of the preceding claims, wherein the at least one wax has a melting point below 70 °C.

9. Erasable, unburnt colored lead or erasable, unburnt colored chalk according to any one of the preceding claims, wherein at least two types of waxes with different length of carbon chains are present, in particular waxes comprising a C16 chain and waxes comprising a C18 chain are present.

10. Erasable, unburnt colored lead or erasable, unburnt colored chalk according to claim 9, wherein waxes comprising a C16 chain are present in an amount between 20.0 and 35.0% by weight and waxes comprising a C18 chain are present in an amount between 60.0 and 80.0% by weight within the total percentage of weight of the amount of waxes in the lead or chalk.

11. Erasable, unburnt colored lead or erasable, unburnt colored chalk according to any one of the preceding claims, wherein the at least one binding agent is present in an amount between 5.0 and 20.0% by weight and/or wherein cellulose derivatives or other derivatives of natural polymers are present as binding agent.

12. Writing, painting or drawing device comprising an erasable, unburnt colored lead according to any one of the preceding claims, wherein the device is a mechanical pencil or a pencil comprising a sheath made of wood or made of a wood substitute material surrounding the erasable, unburnt colored lead.

13. Method for manufacturing an erasable, colored lead or erasable, colored chalk, in particular according to any one of claims 1 to 12, comprising the following method steps:
a) mixing and homogenizing the at least one filler material, the at least one colorant, the graphite, the at least one binding agent and the at least one wax thereby forming a lead- or chalk base mass,
b) extruding the lead- or chalk base mass, in particular by means of hydraulic pressing thereby forming lead or chalk strands,
c) drying the extruded lead or chalk strands.

14. Method for manufacturing an erasable colored lead or erasable, colored chalk according to claim 13, wherein step a) comprises the following sub-steps:
a1) mixing the at least one filler material, the graphite, the binding agent and the at least one colorant, in particular for 25 - 35 min,
a2) adding the at least one wax and water;
a3) heating the mixture to a temperature 50 - 60 °C and maintaining the temperature for 120 min,
a4) cooling the mixture to a temperature of 40 - 46 °C.

15. Method for manufacturing an erasable colored lead or erasable, colored chalk according to claim 13 or 14, wherein step c) comprises drying the extruded lead or chalk strands at a temperature between 40 - 70°C.

## Amended claims

### Amended claims in accordance with Rule 137(2) EPC.

**1.** Erasable, unburnt colored lead for writing, drawing and painting devices or erasable, unburnt colored chalk containing at least one filler material, graphite, at least one colorant, at least one binding agent and at least one wax, in particular at least two types of waxes, wherein boron nitride is present as a filler material and at least one pigment is present as colorant, wherein the at least one filler material is present in an amount between 40 and 80% by weight and wherein graphite is present in an amount between 1.0 and 3.0% by weight.

**2.** Erasable, unburnt colored lead or erasable, unburnt colored chalk according to claim 1, wherein the at least one colorant is present in an amount between 0.5 and 25% by weight, preferably in an amount between 0.5 and 20% by weight.

**3.** Erasable, unburnt colored lead or erasable, unburnt colored chalk according to claim 1 or 2, wherein at least one dye and at least one pigment are present as colorant.

**4.** Erasable, unburnt colored lead or erasable, unburnt colored chalk according to any one of the preceding claims, wherein at least one pH stabilizing agent is present, in particular wherein the at least one pH stabilizing agent is present in an amount between 0.1 and 4.0% by weight.

**5.** Erasable, unburnt colored lead or erasable, unburnt colored chalk according to any one of the preceding claims, wherein the at least one wax is present in an amount between 10.0 and 50.0% by weight.

**6.** Erasable, unburnt colored lead or erasable, unburnt colored chalk according to any one of the preceding claims, wherein the at least one wax has a melting point below 70°C.

**7.** Erasable, unburnt colored lead or erasable, unburnt colored chalk according to any one of the preceding claims, wherein at least two types of waxes with different length of carbon chains are present, in particular waxes comprising a C16 chain and waxes comprising a C18 chain are present.

**8.** Erasable, unburnt colored lead or erasable, unburnt colored chalk according to claim 7, wherein waxes comprising a C16 chain are present in an amount between 20.0 and 35.0% by weight and waxes comprising a C18 chain are present in an amount between 60.0 and 80.0% by weight within the total percentage of weight of the amount of waxes in the lead or chalk.

**9.** Erasable, unburnt colored lead or erasable, unburnt colored chalk according to any one of the preceding claims, wherein the at least one binding agent is present in an amount between 5.0 and 20.0% by weight and/or wherein cellulose derivatives or other derivatives of natural polymers are present as binding agent.

**10.** Writing, painting or drawing device comprising an erasable, unburnt colored lead according to any one of the preceding claims, wherein the device is a mechanical pencil or a pencil comprising a sheath made of wood or made of a wood substitute material surrounding the erasable, unburnt colored lead.

**11.** Method for manufacturing an erasable, colored lead or erasable, colored chalk according to any one of claims 1 to 9, comprising the following method steps:
a) mixing and homogenizing the at least one filler material, the at least one colorant, the graphite, the at least one binding agent and the at least one wax thereby forming a lead- or chalk base mass, whereby the at least one filler is added in an amount between 40 and 80% by weight of the lead-or chalk base mass, and whereby graphite is added in an amount between 1.0 and 3.0% by weight of the lead-or chalk base mass
b) extruding the lead- or chalk base mass, in particular by means of hydraulic pressing thereby forming lead or chalk strands,
c) drying the extruded lead or chalk strands.

**12.** Method for manufacturing an erasable colored lead or erasable, colored chalk according to claim 11, wherein step a) comprises the following sub-steps:
a1) mixing the at least one filler material, the graphite, the binding agent and the at least one colorant, in particular for 25 - 35 min,
a2) adding the at least one wax and water;
a3) heating the mixture to a temperature 50 - 60°C and maintaining the temperature for 120 min,
a4) cooling the mixture to a temperature of 40 - 46°C.

**13.** Method for manufacturing an erasable colored lead or erasable, colored chalk according to claim 11 or 12, wherein step c) comprises drying the extruded lead or chalk strands at a temperature between 40 - 70°C.

**1.** Erasable, unburnt colored lead for writing, drawing and painting devices or erasable, unburnt colored chalk containing at least one filler material, graphite, at least one colorant, at least one binding agent and at least one wax, in particular at least two types of waxes, wherein boron nitride is present as a filler material and at least one dye and at least one pigment are present as colorant, wherein the at least one filler material is present in an amount between 40 and 80% by weight and wherein graphite is present in an amount between 1.0 and 3.0% by weight.

**2.** Erasable, unburnt colored lead or erasable, unburnt colored chalk according to claim 1, wherein the at least one colorant is present in an amount between 0.5 and 25% by weight, preferably in an amount between 0.5 and 20% by weight.

**3.** Erasable, unburnt colored lead or erasable, unburnt colored chalk according to any one of the preceding claims, wherein at least one pH stabilizing agent is present, in particular wherein the at least one pH stabilizing agent is present in an amount between 0.1 and 4.0% by weight.

**4.** Erasable, unburnt colored lead or erasable, unburnt colored chalk according to any one of the preceding claims, wherein the at least one wax is present in an amount between 10.0 and 50.0% by weight.

**5.** Erasable, unburnt colored lead or erasable, unburnt colored chalk according to any one of the preceding claims, wherein the at least one wax has a melting point below 70°C.

**6.** Erasable, unburnt colored lead or erasable, unburnt colored chalk according to any one of the preceding claims, wherein at least two types of waxes with different length of carbon chains are present, in particular waxes comprising a C16 chain and waxes comprising a C18 chain are present.

**7.** Erasable, unburnt colored lead or erasable, unburnt colored chalk according to claim 6, wherein waxes comprising a C16 chain are present in an amount between 20.0 and 35.0% by weight and waxes comprising a C18 chain are present in an amount between 60.0 and 80.0% by weight within the total percentage of weight of the amount of waxes in the lead or chalk.

**8.** Erasable, unburnt colored lead or erasable, unburnt colored chalk according to any one of the preceding claims, wherein the at least one binding agent is present in an amount between 5.0 and 20.0% by weight and/or wherein cellulose derivatives or other derivatives of natural polymers are present as binding agent.

**9.** Writing, painting or drawing device comprising an erasable, unburnt colored lead according to any one of the preceding claims, wherein the device is a mechanical pencil or a pencil comprising a sheath made of wood or made of a wood substitute material surrounding the erasable, unburnt colored lead.

**10.** Method for manufacturing an erasable, colored lead or erasable, colored chalk according to any one of claims 1 to 8, comprising the following method steps:
a) mixing and homogenizing the at least one filler material, the at least one colorant, the graphite, the at least one binding agent and the at least one wax thereby forming a lead- or chalk base mass, whereby the at least one filler is added in an amount between 40 and 80% by weight of the lead-or chalk base mass, whereby graphite is added in an amount between 1.0 and 3.0% by weight of the lead-or chalk base mass and whereby at least one pigment and at least one dye are added as colorant,
b) extruding the lead- or chalk base mass, in particular by means of hydraulic pressing thereby forming lead or chalk strands,
c) drying the extruded lead or chalk strands.

**11.** Method for manufacturing an erasable colored lead or erasable, colored chalk according to claim 10, wherein step a) comprises the following sub-steps:
a1) mixing the at least one filler material, the graphite, the binding agent and the at least one colorant, in particular for 25 - 35 min,
a2) adding the at least one wax and water;
a3) heating the mixture to a temperature 50 - 60°C and maintaining the temperature for 120 min,
a4) cooling the mixture to a temperature of 40 - 46°C.

**12.** Method for manufacturing an erasable colored lead or erasable, colored chalk according to claim 10 or 11, wherein step c) comprises drying the extruded lead or chalk strands at a temperature between 40 - 70°C.
